# EUROPÄISCHE PATENTSCHRIFT

(11) **EP 1 586 785 B1**
(45) Veröffentlichungstag und Bekanntmachung des Hinweises auf die Patenterteilung: **12.01.2011**
(21) Anmeldenummer: 05004199.5
(22) Anmeldetag: 25.02.2005
(51) Int. Cl.: F16D 33/06

(54) **Anordnung und Verfahren zur Ankopplung eines Luftpressers an die Antriebswelle einer Brennkraftmaschine**
Arrangement and method of coupling an air compressor to the drive shaft of a combustion engine
Arrangement et méthode d'accouplement d'un compresseur d'air à l'arbre d'entraînement d'un moteur de combustion

(30) Priorität: 06.04.2004 DE 102004016904
(43) Veröffentlichungstag der Anmeldung: 19.10.2005
(73) Patentinhaber: MAN Nutzfahrzeuge Aktiengesellschaft, 80995 München (DE)
(72) Erfinder: Möller, Heribert, 91623 Sachsen (DE)

(56) Entgegenhaltungen:
- WO-A-2005/068800
- GB-A- 862 017
- JP-A- 57 129 931
- US-A- 3 394 618

## Beschreibung

Gegenstand der Erfindung ist eine Anordnung zur Ankopplung eines Luftpressers an die Antriebswelle einer als Antriebsmotor an einem Fahrzeug betriebenen Brennkraftmaschine, wobei der Luftpresser eine Druckluftanlage speist, sowie ein Verfahren zum Betreiben einer solchen Anordnung.

Bei heute üblichen Fahrzeugen, die über Druckluftanlagen verfügen, ist der Luftpresser über entsprechende Getriebeanordnungen direkt mit der Antriebswelle der Brennkraftmaschine gekoppelt.

Die vom Luftpresser in die Druckluftanlage gelieferte Luftmenge wird durch in der Druckluftanlage angeordnete Überdruckventile in der Weise geregelt, dass bei Überschreiten eines Maximaldruckes, die überschüssige Luft durch die besagten Überdruckventile entweicht.

Derartige Anordnungen sind zwar einfach in ihrem Aufbau, tragen aber der heute geforderten Minimierung des Treibstoffverbrauchs nicht Rechnung und haben zudem den Nachteil, dass die bei den verwendeten Luftpressern des HubkolbenTyps gegebene Eigenschaft, nach Überschreiten des oberen Totpunktes durch Rückexpansion ein negatives Drehmoment auszuüben, zum Abheben der Zahnflanken vorgeordneter Zahnradgetriebe führt. Diese Zahnflankenwechsel wiederum sind für eine äußerst unangenehme Geräuschentwicklung verantwortlich und erhöhen den Verschleiß an den beteiligten Zahnrädern.

Die WO 2005/068800 A beschreibt eine Antriebskraftübertragungsvorrichtung zum Übertragen von Antriebskräften zwischen zwei Wellen insbesondere in einem Antriebsstrang eines Kraftfahrzeugs. Gemäß einer Ausführungsform betrifft die Erfindung ein sogenanntes Turbo-Compound-System mit einer solchen Antriebskraftübertragungsvorrichtung zwischen der Kurbelwelle eines Verbrennungsmotors und einer Abgasnutzturbine. Zu der Problematik, einen Luftpresser des Hubkolbentyps an einen Antrieb anzukoppeln, ist diesem Dokument nichts zu entnehmen.

Weiter zeigt die JP 57 129931 A einen im Wesentlichen identischen Flüssigkeitskupplungstyp wie die WO 2005/068800 A, in das Gehäuse der Turbo-Kupplung ist eine Übersetzung integriert. Verwendet wird die Kupplung, um das Kompressorrad eines Rotationskompressors an einen Antrieb zu koppeln. Auch hier trifft die spezielle Problematik, die beim Ankoppeln eines Luftpressers des Hubkolbentyps an einen Antrieb auftritt, nicht zu.

In der US 3 394 618 A ist eine komplexe Getriebeanordnung beschrieben, in die ein oder zwei Turbo-Kupplungen integriert sind. Auch diesem Dokument befasst sich nicht mit der Problematik des Ankoppelns eines Luftpressers des Hubkolbentyps an einen Antrieb.

Die GB 862 017 A schließlich beschreibt eine Anordnung die eine Brennkraftmaschine, ein von dieser angetriebenes Getriebe und einen wiederum von diesem über eine Turbo-Kupplung angetriebenen Luftpresser des Hubkolbentyps zeigt. Die Turbokupplung dient dazu, durch eine entsprechende Steuerung des Füllstandes die Drehzahl die an dem Luftpresser anliegt, in einem zulässigen Bereich zu halten. Zu der spezifischen Problematik hinsichtlich der Geräuschentwicklung es Luftpressers durch Rückexpansion, und der Lösung dieses Problems ist auch diesem Dokument nichts zu entnehmen.

Ausgehend von den vorstehenden Gegebenheiten liegt der Erfindung die Aufgabe zugrunde, eine Anordnung zur Ankopplung des Luftpressers an die Antriebswelle einer als Antriebsmotor in einem Fahrzeug betriebenen Brennkraftmaschine anzugeben, die den Treibstoffverbrauch der Brennkraftmaschine minimiert und keine negativen Drehmomente überträgt.

Weiterhin ist es Aufgabe der Erfindung, ein Verfahren zum Betrieben der erfindungsgemäßen Anordnung anzugeben.

Gelöst wird die Aufgabe durch eine Anordnung gemäß dem Patentanspruch 1, sowie durch ein Verfahren nach dem Patentanspruch 13.

Vorteilhafte Ausgestaltungen der erfindungsgemäßen Anordnung bzw. des erfindungsgemäßen Verfahrens sind in den jeweils abhängigen Ansprüchen gekennzeichnet.

Bei der Lösung der Aufgabe wurde davon ausgegangen, dass die geforderte Anordnung einem wesentlichen in der Aufgabenstellung implizit enthaltenen Umstand Rechnung tragen muss, die Anordnung darf keinen negativen Einfluss auf das Fahrverhalten, bzw. den Fahrkomfort haben, wie er gegeben wäre wenn plötzlich auftretende Drehmomentschwankungen sich in plötzlichen Beschleunigungs- oder Verzögerungsvorgängen oder auch nur Veränderungen des Geräuschniveaus der Brennkraftmaschine bemerkbar machen würden.

Unter Berücksichtigung dieser Grundforderung wurde gefunden, dass eine hydrodynamische Kupplung oder auch Turbokupplung, dann, wenn sie schaltbar ist, durch den verzögerten Aufbau des übertragbaren Momentes einerseits diese implizite Grundforderung erfüllt und andererseits die Aufgabe löst.

Der Einsatz einer schaltbaren Turbokupplung als Getriebeglied zwischen der Kurbelwelle der Brennkraftmaschine und dem Luftpresser ermöglicht es in vorteilhafter Weise den Luftpresser bedarfsweise zuzuschalten ohne dass sich irgendwelche plötzlichen Drehmomentschwankungen und in Folge davon plötzliche geringfügige Beschleunigungs- oder Verzögerungsvorgänge oder plötzliche Veränderungen des Geräuschniveaus der Brennkraftmaschine bemerkbar machen würde.

Besonders vorteilhaft ist der Einsatz einer sogenannten füllungsgesteuerten Turbokupplung, weil dadurch ein gezieltes Erhöhen bzw. Vermindern des durch die Turbokupplung übertragenen Drehmomentes möglich ist.

Die drehbare Lagerung des Pumpenrades auf der mit dem Luftpresser in Wirkverbindung stehenden Welle oder, besonders vorteilhaft, auf dem drehfest mit dieser Welle verbundenen Turbinenrad, ermöglicht eine besonders kompakte Ausführung der erfindungsgemäßen Anordnung. Eine derartige Anordnung lässt sich wahlweise als Einfach-Turbokupplung mit nur einem konzentrisch in Turbinen- und Pumpenrad angeordneten Fluidkammer-System oder, bei erhöhter Anforderung an das übertragbare Moment, als Doppel-Turbokupplung mit zwei konzentrisch in Turbinen- und Pumpenrad angeordneten Fluidkammer-Systemen ausführen.

Das von der Kurbelwelle der Brennkraftmaschine angetriebene Pumpenrad eignet sich , da es permanent angetrieben wird, also mit der Kurbelwelle in einem festlegbaren Drehzahlverhältnis umläuft, als Zwischenglied für den Antrieb eines oder mehrerer weiterer Nebenaggregate der Brennkraftmaschine, wie Lenkhilfepumpe, Lichtmaschine usw..

Besonders vorteilhaft ist es dabei, wenn an dem Pumpenrad auf seinem äußeren Umfang eine Verzahnung vorgesehen ist, die mit einem von der Antriebswelle angetriebenen Ritzel einerseits und mit den Antriebsritzeln der weiteren Nebenaggregate andererseits kämmt, weil sich so die Funktion der Turbokupplung in vorteilhafter Weise in ein Zahnrad einer Getriebekette integrieren lässt und durch das von den Nebenaggregaten geforderte Antriebsmoment dem Problem des Zahnflankenschlagens durch den Luftpresser bereits vorgebeugt ist.

Das Befüllen und Entleeren der Turbokupplung lässt sich vorteilhaft mit zwei im Fluidkreislauf der Turbokupplung angeordneten schaltbaren Ventilen erreichen, wobei das Befüllen über eine Druckleitung erfolgt und das Entleeren durch die in der Turbokupplung wirkende Zentrifugalkräfte bewerkstelligt wird. Dabei kann der Fluidkreislauf in vorteilhafter Weise Teil des Ölkreislaufes oder des Kühlwasser-Kreislaufes der Brennkraftmaschine sein.

Die Anordnung zur Ankopplung des Luftpressers wird dabei in vorteilhafter Weise nach einem Verfahren betrieben, das einerseits die Turbokupplung in Abhängigkeit vom Druck im Druckluftsystem des Fahrzeugs schaltet, was zu einer Minimierung des Kraftstoffbedarfes beiträgt und andererseits die Füllung der Turbokupplung so steuert, dass der Luftpresser kein nennenswertes negatives Drehmoment, also ein Drehmoment entgegen der Antriebs-Drehrichtung des Luftpressers das durch Rückexpansion im Verdichtungsraum des Luftpressers bewirkt wird, übertragen kann. Neben einer dazu optimierten Gestaltung der Fluidkammern lässt sich dies in vorteilhafter Weise dadurch erreichen, dass die Turbokupplung entweder permanent oder besonders vorteilhaft nur dann, wenn die negativen Drehmomente auftreten, mit so viel Schlupf betrieben wird, dass eine Übertragung dieser negativen Drehmomente durch die Turbokupplung nicht stattfindet.

Weitere Aspekte der erfindungsgemäßen Anordnung bzw. des erfindungsgemäßen Verfahrens zum Betreiben der Anordnung sind nachfolgend unter Zuhilfenahme der Zeichnungen beispielhaft erläutert. Es zeigen:
- Fig. 1: eine in ein Zahnrad einer Getriebekette integrierte Turbo- Kupplung als schaltbaren Luftpresserantrieb
- Fig. 2: das Beispiel nach Fig. 1, ausgeführt als Doppel-Turbokupplung
- Fig. 3: ein Fluidkreislauf zur Ansteuerung der Turbokupplung nach Fig. 2

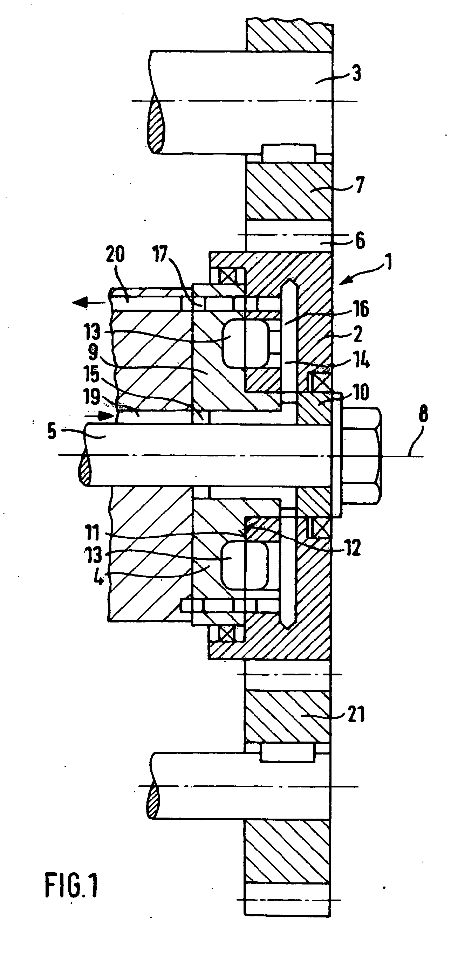

Zum Antrieb eines Luftpressers ist, wie in Fig. 1 vereinfacht dargestellt, eine Turbokupplung 1 vorgesehen, deren Turbinenrad 4 drehfest auf der den Luftpresser ( nicht dargestellt) antreibenden Welle 5 sitzt. Das Turbinenrad 4 weist einen ersten Teilbereich 9 mit einem großen Durchmesser und einen zweiten Teil 10 mit einem kleinen Durchmesser auf. Das Pumpenrad 2 der Turbokupplung 1 ist als ringförmige Rotationskörper ausgeführt und lagert mit seinem Innendurchmesser drehbar auf dem zweiten Teil 10 des Turbinenrades 4, derart, dass die einander zugewandten seitlichen Begrenzungsflächen 11, 12 des Turbinenrades 4 und des Pumpenrades unmittelbar aneinander grenzen. In dem Turbinenrad 4 und dem Pumpenrad 2 sind konzentrisch zur Rotationsachse 8 im wesentlichen hälftig, mit ihren Hälften einander gegenüberliegend, jeweils die benachbarten seitlichen Begrenzungsflächen 12, 11 des Pumpenrades 2 und des ersten Teilbereiches 9 des Turbinenrades 4 durchdringend, Fluidkammern 13 angeordnet. Das Fluid wird den Fluidkammern 13 über einen gestellfest am Luftpresser angeordneten Fluid-Versorgungskanal 19 zugeführt und gelangt über die umlaufende Fluid-Zuführrinne 15 und die Fluid-Zuführkanäle 14 in die Fluidkammern 13 die den Arbeitsraum der Turbokupplung 1 bilden. Zum Entleeren der Turbokupplung 1 sind ebenfalls mit den Fluidkammern 13 verbundene Fluid-Abführkanäle 16 vorgesehen, die über eine Fluid-Entleerungsrinne 17 und einen zum Luftpresser gestellfesten Fluid-Abführkanal 20 das Fluid aus den Fluidkammern 13 abführen.

Der Antrieb der Anordnung erfolgt über die Antriebswelle 3 der Brennkraftmaschine ( nicht dargestellt ). Zu diesem Zweck ist auf der Antriebswelle 3 ein Ritzel 7 angeordnet, das mit einer auf dem äußeren Umfang des Pumpenrades 2 angeordneten Verzahnung 6 kämmt. Über die Verzahnung 6 wird ein mit dieser kämmendes Antriebsritzel 21 angetrieben, das seinerseits auf ein weiteres Nebenaggregat wirkt und dieses antreibt.

Bei dem Nebenaggregat kann es sich um die Lenkhilfepumpe, die Lichtmaschine oder ähnliche Nebenaggregate handeln.

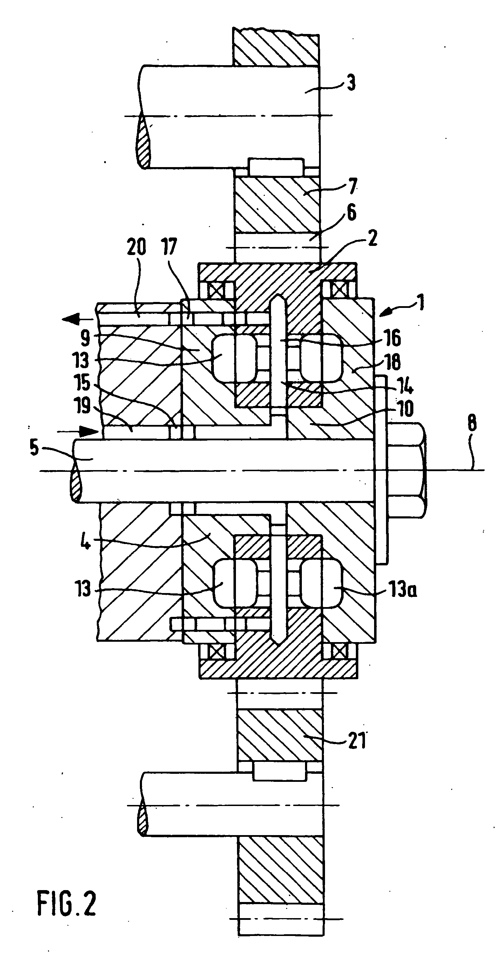

Eine gegenüber dem Beispiel nach Fig. 1 erweiterte Ausführungsform ist in Fig. 2 ebenfalls vereinfacht dargestellt. Nachdem das gezeigte Beispiel bis auf die angesprochene Erweiterung mit der Anordnung nach Fig. 1 identisch ist, wird hinsichtlich der Beschreibung dieser identischen Teile auf die Beschreibung zur Fig. 1 verwiesen.

Bei der Anordnung nach Fig. 2 handelt es sich um eine Doppel-Turbokupplung. Darunter ist zu verstehen, dass gleichzeitig zwei parallele Fluidkammer-Systeme wirksam werden. Zu diesem Zweck ist dem das Turbinenrad 4 bildenden Rotationskörper neben dem ersten Teilbereich 9 und dem zweiten Teilbereich 10 ein dritter Teilbereich 18 zugeordnet, dessen Durchmesser im wesentlichen dem Durchmesser des ersten Teilbereiches 9 entspricht. Nachdem der zweite Teilbereich 10 des Turbinenrades 4 zur Lagerung des Pumpenrades 2 zugänglich sein muß, ist das Turbinenrad 4 in zwei Teilkörper geteilt, wobei die nicht dargestellte Teilungsfläche, die Rotationsachse 8 schneidend, im zweiten Teilbereich 10 des Turbinenrades 4 angeordnet ist. Wird nun das Pumpenrad 2 auf dem zweiten Teilbereich 10 drehbar angeordnet, kann ein zweites Fluidkammer-System parallel zum ersten Fluidkammer-System dadurch realisiert werden, dass weitere Fluidkammern 13 a konzentrisch zur Rotationsachse 8 im wesentlichen hälftig, einander gegenüberliegend, die jeweils benachbarten Begrenzungsflächen des Pumpenrades 2 und des dritten Teilbereiches 18 des Turbinenrades 4 durchdringend, im dritten Teilbereich 18 des Turbinenrades 4 und im gegenüberliegenden Teil des Pumpenrades 2 angeordnet sind.

Der Vorteil einer Doppel-Turbokupplung liegt auf der Hand. Bei nur unwesentlich größeren Außenabmessungen lässt sich das doppelte Drehmoment übertragen.

Die in Verbindung mit Fig. 1 und Fig. 2 beschriebenen Anordnungen zeichnen sich dadurch aus, dass die Turbokupplung in ein Zahnrad integriert ist und damit einerseits zu einem Glied in einer Getriebekette im Sinne eines einfachen Zahnrades wird, gleichzeitig aber, schaltbar und mit einer steuerbaren Übertragungscharakteristik, das Antriebsmoment für den Luftpresser aus dieser Getriebekette ableitet.

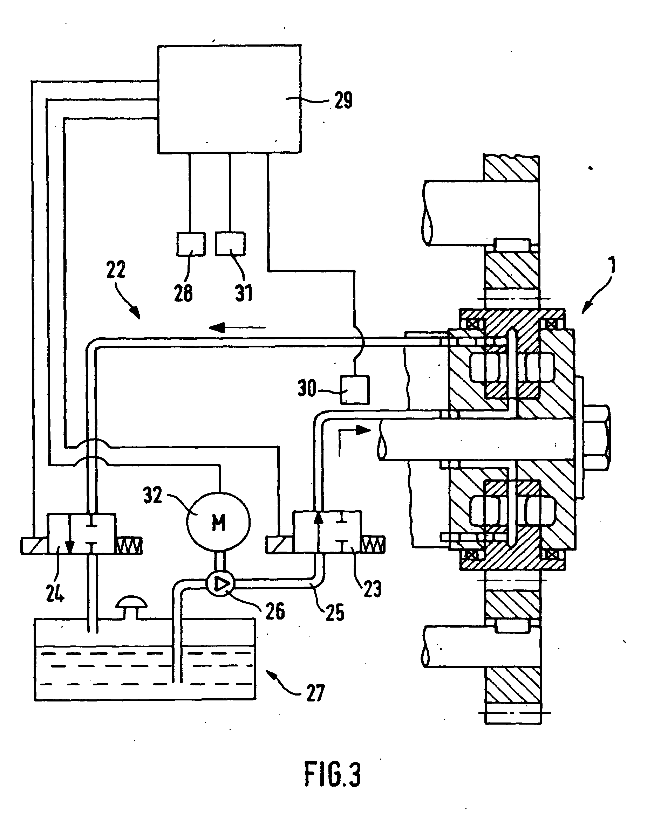

Das erfindungsgemäße Verfahren zum Betreiben der vorstehend beschriebenen Anordnung und damit ihre Funktionsweise wird nachfolgend mit Hilfe der Fig. 3 und wo nötig der Fig. 2 näher erläutert.

Wie bereits ausgeführt, dient die erfindungsgemäße Anordnung dazu, den Luftpresser eines mit einer Druckluftanlage ausgestatteten, mittels einer Brennkraftmaschine betriebenen Fahrzeugs, in Abhängigkeit vom tatsächlichen Druckluftbedarf zuzuschalten, um den Treibstoffbedarf des Fahrzeugs zu minimieren. Es wird für die nachfolgende Beschreibung davon ausgegangen, dass die Brennkraftmaschine in Betrieb ist.

Wie bereits ausgeführt, bedient sich die Turbokupplung 22 in bekannter Weise zur Übertragung von Drehmomenten eines Fluids als Arbeitsmedium, das über einen externen Fluidkreislauf 22 der Turbokupplung 1 zugeführt wird. Der Fluidkreislauf 22 führt ausgehend von einem Vorratsbehälter 27 über eine Pumpe 26 eine Druckleitung 25 ein erstes schaltbares Ventil 23 und ggf. weitere Leitungen zu dem mit dem Luftpresser gestellfesten Fluid-Versorgungskanal 19, der wiederum über die Fluid-Zuführrinne 15 und die Fluid-Zuführkanäle 14 mit den Fluidkammern 13, 13a verbunden ist. Von den Fluidkammern 13, 13a führen zur Entleerung der Turbokupplung 1 Fluid-Abfuhrkanäle 16 über die Fluid-Entleerungsrinne 17, den mit dem Luftpresser gestellfesten Fluid-Abführkanal 20, sowie ggf. weitere Leitungen und ein zweites schaltbares Ventil 24 zum Vorratsbehälter 27 zurück.

Der Fluidkreislauf 22 kann, wie bereits ausgeführt, Teil des Ölkreislaufs oder Teil des Kühlwasserkreislauf der Brennkraftmaschine sein. In diesem Fall ist die zum Zwecke der Förderung des Fluids vorgesehene Pumpe 26 entweder die Ölpumpe oder die Kühlwasserpumpe der Brennkraftmaschine. Handelt es sich bei dem in der Turbokupplung verwendeten Fluid um ein spezielles Medium, wird zum Betreiben der Pumpe 26 ein eigener Antrieb, im Beispiel ein Motor 32 benötigt.

Zur Steuerung des Betriebes des Luftpressers ist eine Steuereinheit 29 vorgesehen, die durch die in heute üblichen Fahrzeugen verwendete elektronische Fahrzeugsteuerung gebildet ist oder eine Teilkomponente davon sein kann.

Mittels der Steuereinheit 29 wird bei in Betrieb befindlicher Brennkraftmaschine ein in der Druckluftanlage angeordneter Drucksensor 28 zyklisch abgefragt und die so festgestellte, dem aktuellen Druck in der Druckluftanlage proportionale Messgröße mit einem gespeicherten Minimal- bzw. Maximalwert vergleichen.

Ergibt der Vergleich eine Unterschreitung des gespeicherten Minimalwertes, öffnet die Steuereinheit 29 das erste schaltbare Ventil 23, so dass das von der Pumpe 26 aus dem Vorratsbehälter 27 in die Druckleitung 25 geförderte Fluid über dieses Ventil, den gestellfesten Fluid-Versorgungskanal 19, die Fluid-Zuführrinne 15 und den Fluid-Zuführkanal 14 in die Fluidkammern 13, 13a gelangt. Zu diesem Zeitpunkt ist das zweite schaltbare Ventil 24 geschlossen, so dass sich die Fluidkammern 13, 13a mit den Fluid, also dem Arbeitsmedium füllen. Mit steigendem Füllstand in den Fluidkammern 13, 13a beginnt die Turbokupplung 1 Drehmomente auf die mit dem Luftpresser wirkverbundene Wellen 5 zu übertragen, wodurch dieser mit abnehmendem Schlupf in der Turbokupplung 1 sanft anläuft. Durch den sanften Anlauf wird jede abrupte Drehmomentänderung vermieden, die Zuschaltung des Luftpressers hat somit keinen merklichen Einfluss auf das Fahrverhalten oder Geräuschniveau des Fahrzeuges.

Die Füllmenge des Fluidkreislaufes wird durch die Steuereinheit 29 mittels eines Füllmengensensor 30, der z.B. als Durchflussmengenmesser in einer Fluid-Zuführleitung oder, in einer vereinfachten Ausführungsform, als die Öffnungszeit des ersten schaltbaren Ventils 23 bestimmendes Zeitglied ausgeführt sein kann, derart geregelt, dass die in der Turbokupplung befindliche Fluidmenge einen vorgegebenen Schlupf in der Turbokupplung 1 zulässt, um zu verhindern, dass die bereits erwähnten, bei Luftpressern des Hubkolbentyps auftretenden negativen Drehmomente von der Turbokupplung 1 übertragen werden. Unterstützt werden kann dies in einer alternativen Ausführungsform dadurch, dass die Füllmenge der Turbokupplung 1 immer dann kurzzeitig vermindert wird, wenn die negativen Drehmomente auftreten. Bewerkstelligt wird dies durch kurzzeitiges Öffnen des zweiten schaltbaren Ventils 24 zum Entleeren und kurzzeitigen Öffnen des ersten schaltbaren Ventils 23 zum wieder Befüllen mittels der Steuereinheit 29. Der Zeitpunkt zu dem das Öffnen und Schließen des zweiten schaltbaren Ventils 24 bzw. des ersten schaltbaren Ventils 23 erfolgt wird von der Steuereinheit 29 durch Überwachen des Betriebszyklus des Luftpressers ermittelt. Dazu werden Sensormittel 31, z.B. in Form eines Drehwinkelgebers eingesetzt über die die mit diesen verbundene Steuereinheit 29 den Zeitpunkt erfasst, zu dem die negativen Drehmomente, die nach den Überschreiten des oberen Todpunktes durch den Kolben des Luftpressers auftreten, zu kompensieren sind. Bei Öffnen des zweiten schaltbaren Ventils 24 entleert sich die Turbokupplung durch die wirksamen Zentrifugalkräfte sehr schnell, so dass sich durch ein schnelles Umsteuern der Ventile 23, 24 die Füllmengenreduzierung der Turbokupplung 1 auf sehr kurze Zeiträume beschränken lässt.

Erfasst die Steuereinheit 29 über den Druck-Sensor 28 ein Überschreiten des maximal zulässigen Druckes in der Druckluftanlage des Fahrzeugs, erfolgt eine Entleerung der Turbokupplung 1 durch Öffnen des zweiten schaltbaren Ventils 24 mittels der Steuereinheit 29. Sowohl beim Füllvorgang, als auch beim Entleerungsvorgang, kann die Füll- bzw. die Entleergeschwindigkeit durch getaktetes Ansteuern des ersten schaltbaren Ventils 23 bzw. des zweiten schaltbaren Ventils 24 der gewünschten Einschalt- bzw. Ausschaltcharakteristik des Luftpressers angepasst werden.

Zu erwähnen ist schließlich, dass das Zuschalten bzw. Abschalten des Luftpressers 1 auch in Abhängigkeit weiterer Betriebsparameter der Druckluftanlagen, der Brennkraftmaschine oder des Luftpressers selbst erfolgen kann, hierzu ist lediglich eine Verbindung der Steuereinheit 29 zu entsprechenden von diesen Komponenten beeinflussten Gebern und/oder der Steuerungsanordnungen dieser Komponenten zu schaffen

Handelt es sich bei dem in der Turbokupplung 1 verwendeten Arbeitsmedium weder um das Öl aus den Ölkreislauf noch um das Kühlwasser aus dem Kühlwasserkreislauf der Brennkraftmaschine, sondern um ein spezielles Fluid, erfolgt der Antrieb der Pumpe 26 durch einen gesonderten Motor 32, der dann von der Steuereinheit 29 in Abhängigkeit von einem vorliegenden Förderbedarf gesteuert wird.

## Patentansprüche

1. Anordnung zur Ankopplung eines Luftpressers des Hubkolbentyps an die Antriebswelle einer als Antriebsmotor an einem Fahrzeug betriebenen Brennkraftmaschine, wobei der Luftpresser eine Druckluftanlage speist, die Anordnung eine schaltbare Turbokupplung (1) beinhaltet, deren Pumpenrad (2) über die Antriebswelle (3) der Brennkraftmaschine antreibbar ist und über ein Fluid als Arbeitsmedium das Turbinenrad (4) treibt, das seinerseits mit der Welle (5) des anzutreibenden Luftpressers wirkverbunden ist, wobei die schaltbare Turbokupplung (1) eine füllungsgesteuerte Turbokupplung ist **dadurch gekennzeichnet, dass** die Füllung der Turbokupplung mittels einer Steuereinheit (29) so gesteuert ist, dass Drehmomente entgegen der Antriebs-Drehrichtung des Luftpressers nicht übertragen werden, wobei die steuereinheit (29)
- entweden über Sensormittel (31) den Betriebszyklus des Luftpressers überwacht und in jedem Betriebszyklus, kurz bevor der Hubkolben des Luftpressers seinen oberen Totpunkt erreicht, die Füllung der Turbokupplung über steuerbare Ventile (23, 24) kurzzeitig so reduziert,
- oder mittels eines Füllmengensensors oder mittels eines Zeitgliedes die Füllung der Turbokupplung über steuerbaren Ventile (23, 24) maximal nur soweit erhöht, dass die Turbokupplung durch den gegebenen Schlupf keine kurzzeitig auftretenden Drehmoment in die der Antriebs-Drehrichtung des Luftpressers entgegengesetzten Drehrichtung überträgt.

2. Anordnung nach Ansprüchen 1, **dadurch gekennzeichnet, dass** das Turbinenrad (4) drehfest auf einer mit dem Luftpresser in Wirkverbindung stehenden Welle (5) angeordnet ist und das Pumpenrad (2) drehbar auf dem Turbinenrad (4) oder der mit dem Luftpresser in Wirkverbindung stehenden Welle (5) gelagert ist und mit der Antriebswelle (3) der Brennkraftmaschine in Wirkverbindung steht.

3. Anordnung nach Anspruch 2, **dadurch gekennzeichnet, dass**
- das Turbinenrad (4) durch einen ersten Rotationskörper gebildet ist, der in Richtung seiner Rotationsachse (8) gesehen aus wenigstens zwei Teilbereichen (9, 10) besteht, wobei ein erster Teilbereich (9) einen großen Durchmesser aufweist und ein zweiter Teilbereich (10) einen gegenüber dem ersten Teilbereich (9) kleineren Durchmesser besitzt,
- das Pumpenrad (2) durch einen ringförmigen Rotationskörper gebildet ist, der auf dem Turbinenrad (2) im zweiten Teilbereich (10) mit den kleinen Durchmesser drehbar angeordnet ist, derart, dass jeweils eine seitliche Begrenzungsfläche (11, 12) des Pumpenrades (2) und des Turbinenrades (4) unmittelbar aneinander grenzen,
- die Fluidkammern (13) der Turbokupplung (1) konzentrisch zu ihrer Rotationsachse im Wesentlichen hälftig, mit ihren Hälften einander gegen überliegend, jeweils die benachbarten seitlichen Begrenzungsflächen (12, 11) des Pumpenrades (2) und des ersten Teilbereiches (9) des Turbinenrades (4) durchdringend, im ersten Teilbereich (9) des Turbinenrades (4) und im Pumpenrad (2) angeordnet sind,
- wenigstens ein Fluid-Zuführkanal (14) vorgesehen ist, der von einer nabennahen Fluid-Zuführrinne (15) gespeist die Fluidkammern (13) mit dem Fluid versorgt,
- wenigstens ein Fluid-Abführkanal (16) vorgesehen ist, der das Fluid aus den Fluidkammern (13) in eine nabenferne Fluid-Entleerungsrinne (17) abführt.

4. Anordnung nach Anspruch 3, **dadurch gekennzeichnet, dass**
- der das Turbinenrad (4) bildende Rotationskörper in Richtung seiner Rotationsachse (8) gesehen einen dritten Teilbereich (18) aufweist, wobei dieser dritte Teilbereich (18) einen Durchmesser besitzt, der dem Durchmesser des ersten Teilbereiches (9) annähernd entspricht
- das Turbinenrad in zwei Teilkörper geteilt ist, wobei die Teilungsfläche, die Rotationsachse (8) schneidend, im zweiten Teilbereich (10) mit dem zweiten kleinen Durchmesser verläuft,
- das Pumpenrad (2) zwischen dem ersten und dem dritten Teilbereich (9, 18) des Turbinenrades (4) drehbar angeordnet ist, wobei jeweils eine der seitlichen Begrenzungsflächen des Pumpenrades (2) jeweils einer innenliegenden seitlichen Begrenzungsfläche des ersten und des dritten Teilbereiches (9, 18) des Turbinenrades (4) unmittelbar benachbart ist,
- weitere Fluidkammern (13a) konzentrisch zur Rotationsachse (8) vorgesehen sind, die im Wesentlichen hälftig, einander gegenüberliegend, die jeweils benachbarten seitlichen Begrenzungsflächen des Pumpenrades (2) und des dritten Teilbereich (18) des Turbinenrades (4) durchdringend, im dritten Teilbereich (18) des Turbinenrades (4) und im Pumpenrad (2) angeordnet sind.

5. Anordnung nach einem der Ansprüche 3 oder 4, **dadurch gekennzeichnet, dass**
- ein gestellfester Fluid-Versorgungskanal (19) mit der Fluid-Zuführrinne (15) kommuniziert,
- ein gestellfester Fluid-Abführkanal (20) mit der Fluid-Entleerungsrinne (17) kommuniziert,
- ein mit dem Fluid-Versorgungskanal (19) und mit dem Fluid-Abführkanal (20) verbundener Fluidkreislauf (22) vorgesehen ist, über den die Fluidkammern (13, 13a), extern gesteuert, befüllbar und entleerbar sind.

6. Anordnung nach einen der Ansprüche 2 bis 5, **dadurch gekennzeichnet, dass** das Pumpenrad (2) mit wenigstens einem weiteren durch die Antriebswelle (3) der Brennkraftmaschine anzutreibenden Nebenaggregat wirkverbunden ist.

7. Anordnung nach einem der Ansprüche 2 bis 6, **dadurch gekennzeichnet, dass** das Pumpenrad (2) auf seinem äußeren Umfang eine Verzahnung (6) aufweist, die mit einen von der Antriebswelle (3) der Brennkraftmaschine angetriebenen Ritzel (7) kämmt.

8. Anordnung nach Anspruch 7, **dadurch gekennzeichnet, dass** das wenigstens eine weitere Nebenaggregat über ein Antriebsritzel (21) antreibbar ist, wobei das Antriebsritzel (21) mit der Verzahnung (6) des Pumpenrades (2) kämmt.

9. Anordnung nach einem der vorhergehenden Ansprüche, **dadurch gekennzeichnet, dass** die schaltbare Turbokupplung (1) über einen Fluidkreislauf (22) mit dem Fluid befüllbar ist, wobei im Fluidkreislauf (22) zur Befüllung ein erstes schaltbares Ventil (23) vorgesehen ist und die Entleerung der Turbokupplung (1) über ein zweites schaltbares Ventil (24) erfolgt.

10. Anordnung nach Anspruch 9 **dadurch gekennzeichnet, dass** das Befüllen mittels einer Druckleitung (25) erfolgt, wobei das Fluid mittels einer Pumpe (26) aus einem Vorratsbehälter (27) gefördert und unter Druck in die Druckleitung (25) eingespeist wird.

11. Anordnung nach Ansprüche 9 oder 10, **dadurch gekennzeichnet, dass** der Fluidkreislauf (22) Teil des Ölkreislaufs für die Schmierung der Brennkraftmaschine ist.

12. Anordnung nach Ansprüchen 9 oder 10, **dadurch gekennzeichnet, dass** der Fluidkreislauf (22) Teil des Wasserkreislaufs für die Kühlung der Brennkraftmaschine ist.

13. Verfahren zum Betreiben der Anordnung nach Anspruch 1 zur Ankopplung eines Luftpressers des Hubkolbentyps an die Antriebswelle einer als Antriebsmotor an einem Fahrzeug betriebenen Brennkraftmaschine mittels einer schaltbaren Kupplung, **dadurch gekennzeichnet, dass** die schaltbare Kupplung eine füllungsgesteuerte Turbokupplung (1) ist und ein in der Druckluftanlage vorgesehener Druck-Sensor (28) von einer Steuereinheit (29) abgefragt wird und die Steuereinheit (29) daraufhin das Unterschreiten eines minimalen Druckes oder das Überschreiten eines maximalen Druckes festgestellt, wobei
- die Steuereinheit (29) bei Unterschreiten des minimalen Druckes das erste schaltbare Ventil (23) öffnet, so dass das Fluid in den Fluidkreislauf (22) einströmen kann
- die Steuereinheit (29) bei Überschreiten des maximalen Druckes das erste schaltbare Ventil (23) schließt, und das zweite schaltbare Ventil (24) öffnet, so dass das Fluid aus dem Fluidkreislauf (22) abfließt,
- die Füllung der Turbokupplung (1) so gesteuert wird, dass Drehmomente entgegen der Antriebs-Drehrichtung des Luftpressers nicht übertragen werden.

14. Verfahren nach Anspruch 13, **dadurch gekennzeichnet, dass** im Fluidkreislauf (22) ein Füllmengensensor (30) angeordnet ist, den die Steuereinheit (29) zur Ermittlung der aktuellen Füllmenge zyklisch abfragt und die Steuereinheit (29) die Füllmenge mittels der schaltbaren Ventile (23, 24) in Abhängigkeit von ebenfalls von der Steuereinheit (29) erfassten Betriebsparametern der Brennkraftmaschine und/oder des Luftpressers und/oder der Druckluftanlage steuert.

15. Verfahren nach einem der Ansprüche 13 oder 14, **dadurch gekennzeichnet, dass** die Steuereinheit (29) über Sensormittel (31) den Betriebszyklus des Luftpressers überwacht und in jedem Betriebszyklus, kurz bevor der Hubkolben des Luftpressers seinen oberen Totpunkt erreicht, die Füllmenge über die steuerbaren Ventile (23, 24) kurzzeitig so reduziert, dass die Turbokupplung kein nennenswertes Drehmoment in die der Antriebs-Drehrichtung des Luftpressers entgegengesetzten Drehrichtung übertragen kann.

16. Verfahren nach einem der Ansprüche 13 oder 14, **dadurch gekennzeichnet, dass** die Steuereinheit (29) die Füllmenge maximal nur soweit erhöht, dass durch den **dadurch** gegebenen Schlupf der Turbokupplung diese nicht in der Lage ist, kurzfristig entgegen der Antriebsrichtung des Luftpressers auftretende Drehmomente zu übertragen.

## Claims

1. An arrangement for coupling an air compressor of the reciprocating-piston type to the drive shaft of an internal combustion engine which is operated as a drive engine on a vehicle, the air compressor feeding a compressed-air system, the arrangement containing a switchable turbocoupling (1), the pump impeller (2) of which can be driven via the drive shaft (3) of the internal combustion engine and drives the turbine impeller (4) via a fluid as working medium, which turbine impeller in turn is in an operative connection with the shaft (5) of the air compressor which is to be driven, the switchable turbocoupling (1) being a fill-controlled turbocoupling, **characterised in that** the filling of the turbocoupling is controlled by means of a control unit (29) such that torques counter to the driving direction of rotation of the air compressor are not transmitted, the control unit (29)
- either monitoring the operating cycle of the air compressor via sensor means (31) and in each operating cycle, shortly before the reciprocating piston of the air compressor reaches its top dead centre, briefly reducing the filling of the turbocoupling via controllable valves (23, 24) such
- or by means of a filling-quantity sensor or by means of a time element increasing the filling of the turbocoupling via controllable valves (23, 24) at most only to such an extent
that the turbocoupling, due to the resulting slip, does not transmit any briefly occurring torques into the direction of rotation opposite to the driving direction of rotation of the air compressor.

2. An arrangement according to Claims 1 [sic], **characterised in that** the turbine impeller (4) is arranged in rotation-resistant manner on a shaft (5) which is in operative connection with the air compressor, and the pump impeller (2) is mounted rotatably on the turbine impeller (4) or the shaft (5) which is in operative connection with the air compressor, and is in operative connection with the drive shaft (3) of the internal combustion engine.

3. An arrangement according to Claim 2, **characterised in that**
- the turbine impeller (4) is formed by a first body of rotation which, viewed in the direction of its axis of rotation (8), consists of at least two partial regions (9, 10), a first partial region (9) having a large diameter and a second partial region (10) having a smaller diameter than the first partial region (9),
- the pump impeller (2) is formed by an annular body of rotation which is rotatably arranged on the turbine impeller (2) in the second partial region (10) with the small diameter, such that in each case a lateral delimiting surface (11, 12) of the pump impeller (2) and of the turbine impeller (4) are directly adjacent to each other,
- the fluid chambers (13) of the turbocoupling (1) are arranged concentrically to its axis of rotation substantially in halves, with their halves lying opposite one another, penetrating in each case through the adjacent lateral delimiting surfaces (12, 11) of the pump impeller (2) and of the first partial region (9) of the turbine impeller (4), in the first partial region (9) of the turbine impeller (4) and in the pump impeller (2),
- at least one fluid supply duct (14) is provided which, fed by a fluid supply channel (15) close to the hub, supplies the fluid chambers (13) with the fluid,
- at least one fluid discharge duct (16) is provided which discharges the fluid from the fluid chambers (13) into a fluid emptying channel (17) remote from the hub.

4. An arrangement according to Claim 3, **characterised in that**
- the body of rotation forming the turbine impeller (4), viewed in the direction of its axis of rotation (8), has a third partial region (18), this third partial region (18) having a diameter which corresponds approximately to the diameter of the first partial region (9),
- the turbine impeller is divided into two partial bodies, the dividing plane, intersecting the axis of rotation (8), extending in the second partial region (10) with the second, small, diameter,
- the pump impeller (2) is rotatably arranged between the first and the third partial region (9, 18) of the turbine impeller (4), with in each case one of the lateral delimiting surfaces of the pump impeller (2) being directly adjacent to an inner lateral delimiting surface in each case of the first and the third partial regions (9, 18) of the turbine impeller (4),
- further fluid chambers (13a) are provided concentrically to the axis of rotation (8), which are arranged substantially in halves, lying opposite one another, penetrating through the lateral delimiting surfaces of the pump impeller (2) and of the third partial region (18) of the turbine impeller (4) which are adjacent in each case, in the third partial region (18) of the turbine impeller (4) and in the pump impeller (2).

5. An arrangement according to one of Claims 3 or 4, **characterised in that**
- a frame-fixed fluid supply duct (19) communicates with the fluid supply channel (15),
- a frame-fixed fluid discharge duct (20) communicates with the fluid emptying channel (17),
- a fluid circuit (22) connected to the fluid supply duct (19) and to the fluid discharge duct (20) is provided, via which circuit the fluid chambers (13, 13a) can be filled and emptied, under external control.

6. An arrangement according to one of Claims 2 to 5, **characterised in that** the pump impeller (2) is in an operative connection with at least one further ancillary unit which is to be driven by the drive shaft (3) of the internal combustion engine.

7. An arrangement according to one of Claims 2 to 6, **characterised in that** the pump impeller (2) has on its outer periphery a set of teeth (6) which mesh with a pinion (7) driven by the drive shaft (3) of the internal combustion engine.

8. An arrangement according to Claim 7, **characterised in that** the at least one further ancillary unit can be driven via a drive pinion (21), the drive pinion (21) meshing with the set of teeth (6) of the pump impeller (2).

9. An arrangement according to one of the preceding claims, **characterised in that** the switchable turbocoupling (1) can be filled with the fluid via a fluid circuit (22), with a first switchable valve (23) being provided for filling in the fluid circuit (22) and the emptying of the turbocoupling (1) taking place via a second switchable valve (24).

10. An arrangement according to Claim 9, **characterised in that** the filling takes place by means of a pressure line (25), the fluid being delivered from a storage container (27) by means of a pump (26) and being fed under pressure into the pressure line (25).

11. An arrangement according to Claims 9 or 10, **characterised in that** the fluid circuit (22) is part of the oil circuit for lubricating the internal combustion engine.

12. An arrangement according to Claims 9 or 10, **characterised in that** the fluid circuit (22) is part of the water circuit for cooling the internal combustion engine.

13. A method for operating the arrangement according to Claim 1 for coupling an air compressor of the reciprocating-piston type to the drive shaft of an internal combustion engine which is operated as a drive engine on a vehicle by means of a switchable coupling, **characterised in that** the switchable coupling is a fill-controlled turbocoupling (1), and a pressure sensor (28) provided in the compressed-air system is interrogated by a control unit (29) and the control unit (29) thereupon ascertains whether the pressure has dropped below a minimum pressure or has exceeded a maximum pressure, with
- the control unit (29), upon the pressure dropping below the minimum pressure, opening the first switchable valve (23), so that the fluid can flow into the fluid circuit (22),
- the control unit (29), upon the pressure exceeding the maximum pressure, closing the first switchable valve (23), and opening the second switchable valve (24), so that the fluid flows away out of the fluid circuit (22),
- the filling of the turbocoupling (1) being controlled such that torques counter to the driving direction of rotation of the air compressor are not transmitted,

14. A method according to Claim 13, **characterised in that** a filling-quantity sensor (30) is arranged in the fluid circuit (22), which sensor is cyclically interrogated by the control unit (29) to determine the current filling quantity, and the control unit (29) controls the filling quantity by means of the switchable valves (23, 24) dependent on operating parameters of the internal combustion engine and/or of the air compressor and/or of the compressed-air system which are likewise detected by the control unit (29).

15. A method according to one of Claims 13 or 14, **characterised in that** the control unit (29) monitors the operating cycle of the air compressor via sensor means (31) and in each operating cycle, shortly before the reciprocating piston of the air compressor reaches its top dead centre, briefly reduces the filling quantity via the controllable valves (23, 24) such that the turbocoupling cannot transmit any significant torque into the direction of rotation opposite to the driving direction of rotation of the air compressor.

16. A method according to one of Claims 13 or 14, **characterised in that** the control unit (29) increases the filling quantity at most only to such an extent that, due to the resulting slip of the turbocoupling, the latter is not capable of transmitting torques briefly occurring counter to the driving direction of the air compressor.

## Revendications

1. Montage d'embrayage d'un compresseur d'air à piston sur l'arbre d'entraînement d'un moteur thermique de véhicule fonctionnant comme moteur d'entraînement,
montage dans lequel
- le compresseur d'air alimente une installation d'air comprimé,
- le montage comprend un embrayage hydraulique (1), commutable, dont le rotor de pompe (2) est entraîné par l'arbre d'entraînement (3) du moteur thermique pour entraîner le rotor de turbine (4) par l'intermédiaire d'un milieu de travail constitué par du liquide, le rotor de turbine coopérant de son côté avec l'arbre (5) du compresseur d'air à entraîner,
- l'embrayage hydraulique commutable (1) étant un embrayage hydraulique commandé par remplissage,
montage **caractérisé en ce que**
le remplissage de l'embrayage hydraulique est commandé par une unité de commande (29) pour ne pas transmettre de couple opposé au sens de rotation d'entraînement du compresseur d'air,
- l'unité de commande (29) surveillant,
* soit par un capteur (31), le cycle de fonctionnement du compresseur d'air, et dans chaque cycle de fonctionnement, juste avant que le piston du turbocompresseur atteint son point mort haut, elle réduit brièvement le remplissage de l'embrayage hydraulique par des vannes commandées (23, 24),
* soit à l'aide d'un capteur de remplissage ou à l'aide d'un organe de temporisation, elle augmente le remplissage de l'embrayage hydraulique par les vannes commandées (23, 24) à un maximum seulement pour que l'embrayage hydraulique ne transmette grâce au patinage donné, aucun couple produit brièvement dans le sens de rotation opposé au sens de rotation d'entraînement du compresseur d'air.

2. Montage selon la revendication 1,
**caractérisé en ce que**
le rotor de turbine (4) est solidaire en rotation d'un arbre (5) coopérant avec le compresseur d'air, et le rotor de pompe (2) est monté à rotation sur le rotor de turbine (4) ou l'arbre (5) coopérant avec le compresseur d'air et il coopère avec l'arbre d'entraînement (3) du moteur thermique.

3. Montage selon la revendication 2,
**caractérisé en ce que**
- le rotor de turbine (4) est formé par un premier organe de rotation composé dans la direction de son axe de rotation (8), d'au moins deux zones partielles (9, 10),
* la première zone partielle (9) ayant un grand diamètre et la seconde zone partielle (10) ayant un diamètre réduit par rapport à celui de la première zone partielle (9),
- le rotor de pompe (2) est formé par un organe de rotation, annulaire, monté à rotation sur le rotor de turbine (2), au niveau de la seconde zone partielle (10) de petit diamètre de façon que chaque fois une surface limite latérale (11, 12) du rotor de pompe (2) et du rotor de turbine (4) soient directement adjacentes,
- les chambres de fluide (13) de l'embrayage hydraulique (1) sont concentriques à l'axe de rotation en étant situées pratiquement par moitié dans la première zone partielle (9) du rotor de turbine (4) et du rotor de pompe (2), avec leurs moitiés qui se font face, en traversant les surfaces limites latérales voisines (12, 11) du rotor de pompe (2) et de la première zone partielle (9) du rotor de turbine (4),
- au moins un canal d'alimentation en liquide (14) alimente les chambres à liquide (13) en étant lui-même alimenté par une goulotte d'alimentation (15) voisine du moyeu, et
- au moins un canal de sortie de fluide (16) évacue le liquide des chambres hydrauliques (13) dans une goulotte de sortie de liquide (17) éloignée du moyeu.

4. Montage selon la revendication 3,
**caractérisé en ce que**
- l'organe de rotation constituant le rotor de turbine (4) présente en direction de son axe de rotation (8), une troisième zone partielle (18),
* cette troisième zone partielle (18) ayant un diamètre correspondant sensiblement au diamètre de la première zone partielle (9),
- le rotor de turbine est divisé en deux parties de corps et la surface de division coupe l'axe de rotation (8) et passe dans la seconde zone partielle (10) de plus petit diamètre,
- le rotor de pompe (2) est monté à rotation entre la première et la troisième zone partielle (9, 18) du rotor de turbine (4),
* chacune des surfaces limites latérales du rotor de pompe (2) étant directement voisine d'une surface limite latérale située à l'intérieur et appartenant à la première et à la troisième zone partielle (9, 18) du rotor de turbine (4),
- d'autres chambres hydrauliques (13a) concentriques à l'axe de rotation (8) se font face pratiquement par moitié l'une à l'autre, en traversant les surfaces limites latérales du rotor de pompe (2) et de la troisième zone partielle (18) du rotor de turbine (4), ces chambres hydrauliques étant prévues dans la troisième zone partielle (18) du rotor de turbine (4) et dans le rotor de pompe (2).

5. Montage selon l'une des revendications 3 ou 4,
**caractérisé en ce que**
- un canal d'alimentation en liquide (19), solidaire du bâti communique avec la goulotte d'alimentation en liquide (15),
- un canal d'évacuation de liquide (20) solidaire du bâti, communique avec la goulotte d'évacuation de liquide (17),
- un circuit de liquide (22) relié au canal d'alimentation de liquide (19) et au canal de sortie de liquide (20), assure le remplissage et le vidage des chambres hydrauliques (13, 13a), en étant commandé de manière externe.

6. Montage selon l'une des revendications 2 à 5,
**caractérisé en ce que**
le rotor de pompe (2) coopère avec au moins une autre unité auxiliaire entraînée par l'arbre (3) du moteur thermique.

7. Montage selon l'une des revendications 2 à 6,
**caractérisé en ce que**
la périphérie extérieure du rotor de pompe (2) comporte une denture (6) engrènant avec un pignon (7) entraîné par l'arbre (3) du moteur thermique.

8. Montage selon la revendication 7,
**caractérisé en ce qu'**
au moins l'autre unité auxiliaire est entraînée par un pignon d'entraînement (21) et ce pignon d'entraînement (21) engrène avec la denture (6) du rotor de pompe (2).

9. Montage selon l'une des revendications précédentes,
**caractérisé en ce que**
l'embrayage hydraulique commutable (1) est rempli de liquide par un circuit de liquide (22),
- le circuit de liquide (22) comportant une première vanne commandée (23) pour le remplissage et une seconde vanne commandée (24) pour vider l'embrayage hydraulique (1).

10. Montage selon la revendication 9,
**caractérisé en ce que**
le remplissage se fait par une conduite de pression (25),
- le liquide étant transféré par une pompe (26) à partir d'un réservoir d'alimentation (27) pour être fourni sous pression à la conduite de pression (25).

11. Montage selon l'une des revendications 9 ou 10,
**caractérisé en ce que**
le circuit de liquide (22) fait partie du circuit d'huile de lubrification du moteur thermique.

12. Montage selon l'une des revendications 9 ou 10,
**caractérisé en ce que**
le circuit de liquide (22) fait partie du circuit d'eau de refroidissement du moteur thermique.

13. Procédé de gestion du montage selon la revendication 1 pour embrayé un compresseur d'air à piston sur l'arbre d'un moteur thermique entraînant le véhicule et fonctionnant comme moteur d'entraînement, par l'intermédiaire d'un embrayage commutable,
procédé **caractérisé en ce que**
l'embrayage commutable est un embrayage hydraulique (1) à remplissage commandé, et
un capteur de pression (28) d'une unité de commande (29) équipant l'installation d'air comprimé est interrogé et l'unité de commande (29) détecte ensuite le dépassement vers le bas d'une pression minimale ou le dépassement vers le haut d'une pression maximale,
procédé selon lequel
- en cas de dépassement de la pression minimale, l'unité de commande (29) ouvre la première vanne commandée (23) pour fournir du liquide au circuit de liquide (22),
- en cas de dépassement vers le haut de la pression maximale, l'unité de commande (29) ferme la première vanne commandée (23) et ouvre la seconde vanne commandée (24) pour évacuer du liquide du circuit de liquide (22),
- on commande le remplissage de l'embrayage hydraulique (1) pour ne pas transmettre des couples opposés au sens de rotation d'entraînement du compresseur d'air.

14. Procédé selon la revendication 13,
**caractérisé par**
un capteur de remplissage (30) équipant le circuit de liquide (22),
- l'unité de commande (29) interroge ce capteur de remplissage (30), de manière cyclique pour déterminer le niveau de remplissage instantané, et
- l'unité de commande (29) commande le niveau de remplissage par les vannes commandées (23, 24) selon les paramètres de fonctionnement saisis également par l'unité de commande (29) et concernant le moteur thermique et/ou le compresseur d'air et/ou l'installation d'air comprimé.

15. Procédé selon l'une des revendications 13 ou 14,
**caractérisé en ce que**
l'unité de commande (29) surveille le cycle de fonctionnement du compresseur d'air par le capteur (31), et
dans chaque cycle de fonctionnement, juste avant que le piston du compresseur d'air n'atteigne son point mort haut, l'unité de commande réduit brièvement le niveau de remplissage par les vannes commandées (23, 24) pour que l'embrayage hydraulique ne puisse transmettre de couple significatif dans le sens de rotation opposé au sens de rotation d'entraînement du compresseur d'air.

16. Procédé selon l'une des revendications 13 ou 14,
**caractérisé en ce que**
l'unité de commande (29) augmente le niveau de remplissage maximum seulement à un niveau tel, que le patinage qui en résulte pour l'embrayage hydraulique, ne puisse transmettre brièvement des couples opposés au sens de rotation du compresseur d'air.
